# EUROPEAN PATENT APPLICATION

(11) **EP 1 113 315 A1**
(43) Date of publication of application: **04.07.2001**
(21) Application number: 00204590.4
(22) Date of filing: 18.12.2000
(51) Int. Cl.: G03B 17/26, B65D 85/672

(54) **Light-tight container and method for storing and transporting a roll of light sensitive web**

(30) Priority: 28.12.1999 US 473443
(71) Applicant: EASTMAN KODAK COMPANY, Rochester, New York 14650 (US)
(72) Inventor: Earnhart, Edgar G., Rochester, New York 14650-2201 (US); Burns, Parker J., Rochester, New York 14650-2201 (US); Carlile, Dana A., Rochester, New York 14650-2201 (US)
(74) Representative: Lewandowsky, Klaus, Dipl.-Ing.

(57) **Abstract**

A light-tight container for storing and transporting a roll of photosensitive web has a central protuberance that engages an end of the core thereby restricting the core from movement. The central protuberance extends vertically upwardly into the interior compartment to a height sufficient to stabilize the core from movement. Cooperating detent members structurally associated with the container body and closure elements prevent axial movement of the closure element when in a closed light-locked relations with the container body.

## Description

The invention relates generally to the field of packaging, and in particular to packaging for long rolls of photosensitive web material. More specifically, the invention relates to a light-tight container with a core-engaging feature for securely supporting the roll of photographic web from movement and, therefore, from the possibility of damage during handling.

Typically, long rolls of photosensitive web material, e.g., photographic film used for surveillance, social/portrait, and commercial imaging, are commonly packaged in containers ensuring light tightness during shipment from the manufacturer to the film processor. The width of the photosensitive web used for such applications is typically 35mm, 46mm, 70mm, or 105mm. Rolls of photographic film are generally wound onto cores with or without light protecting flanges. Light-tight containers suitable for storing and shipping photosensitive film have a film compartment and a closure adapted to fit rather snugly about the film compartment. Most often, the containers are fabricated of metal or plastic materials.

After using the film, the photographer generally stores it in the light-tight container and then sends the film to a photoprocessing lab where it is developed. As a general practice, technicians at the photoprocessing lab will carry several stacked containers containing exposed film into a dark room to open the containers and prepare the film for processing. While existing containers for storing and transporting rolls of photographic film are stackable, the containers do not have nesting features. Hence, it is not uncommon for technicians to accidentally drop containers onto the floor, as the stack is unstable. Such accidents are known to result in damaged film reels, possible damage to the exposed film and unnecessary exposure to liability to the photoprocessing lab.

Skilled artisans will appreciate that due to the different widths of film, film containers must be available to accommodate the several different sizes. It would, therefore, be advantageous for the manufacturer to be able to utilize a single common container closure with different sizes of container bottoms. Such an advantage is identified in U.S. Patent No. 5,740,914, Apr. 21, 1998, by Herzog, titled, "Closure For Stacking Containers Of Different Sizes." However, unlike the containers described in U.S. Patent No. 5,740,914, the plastic or metal containers used for photographic film require an angle on the external wall of the container bottom typically identified as draft angle for ejection from the forming device. Thus, as the depth of the container bottom changes to accommodate the different widths of film, the bottom diameter of the container bottom would become smaller if each size of container bottom had the same draft angle.

In view thereof, it should be apparent that existing packaging containers for photosensitive film product have numerous shortcomings. For instance, as multiple containers are stacked, they become unstable, and different size container closures are required for different widths of film.

Therefore, a need persists for packaging containers for photosensitive film product that incorporates features to stabilize the roll of photographic web during handling and is cost effective to produce.

It is, therefore, an object of the invention to provide a light tight container for storing and shipping a roll of photosensitive web.

It is another object of the invention to provide a light-tight container that restricts movement of the core on which the roll of photographic web is wound.

It is a feature of the invention that a central protuberance extends upwardly in the interior compartment from the closed base of the container body for engaging an end of the core supporting the photosensitive web. The protuberance and side walls of the container cooperatively protect the photographic web from damage during handling.

The present invention is directed to overcoming one or more of the problems set forth above. Briefly summarized, according to one aspect of the present invention, a light-tight container for storing a roll of photosensitive web wound on a core, comprises:
a generally cylindrical body portion having a closed base and side walls surrounding said closed base, said closed base and said side walls forming an interior compartment for storing said roll of photosensitive web, said closed base having a central protuberance extending upwardly therefrom in said interior compartment for engaging an end of said core; and,
a light-tight closure element for closing said body portion in a light-tight relations, said closure element having a closed portion and lateral walls surrounding said closed portion, said closed portion and said lateral walls having a recessed seam therebetween for receiving end edges of said side walls of said body portion to form a light blocking labyrinth.

In another aspect of the invention, a method of storing and transporting a roll of photosensitive web of indeterminate length wound on a core, comprises the steps of:
providing a light-tight container having a body portion comprising a closed base, side walls surrounding said closed base, a central protuberance extending from said closed base for engaging an end of said core and a closure for closing said body portion;
providing a closure element for closing said body portion in a light tight relations;
arranging one end of said core supporting said roll of photosensitive web on said central protuberance with a portion of said roll resting on said closed base; and,
arranging said closure element on said body portion in a light-tight relations.

The present invention has the following advantages: it is simple to construct and cost effective to produce; it greatly reduces the damage of to roll of photographic material during transport; and it facilitates using the same size container for rolls of film wound on cores with or without light protecting flanges.

The above and other objects, features, and advantages of the present invention will become more apparent when taken in conjunction with the following description and drawings wherein identical reference numerals have been used, where possible, to designate identical features that are common to the figures, and wherein:
Fig. 1 is a perspective view of the closed light-tight container partially torn away to expose the core stabilizing member;
Fig. 2a is a cross-section view of the light-tight container of the invention;
Fig. 2b is an enlarged cross-section view of Fig 2a showing the film core engaging central protuberance and engagement with end of core;
Fig. 2c is an enlarged cross-section view from Fig 2a showing the light blocking labyrinth feature and engaged end edges of container body side walls;
Fig. 2d is an enlarged cross-section view from Fig 2a showing helical thread engagement;
Fig. 3 is a perspective view of the container body exposing the central protuberance;
Fig. 4 is a perspective view of the closure of the invention;
Fig. 5 is a perspective view of the wound roll of photosensitive web on a core with light protecting flanges;
Fig. 6 is a perspective view of a typical wound roll of photosensitive web on a core without light protecting flanges; and
Fig. 7 is a perspective view of the closed light-tight container partially torn away to expose the core stabilizing member showing another core engagement assisting shape.

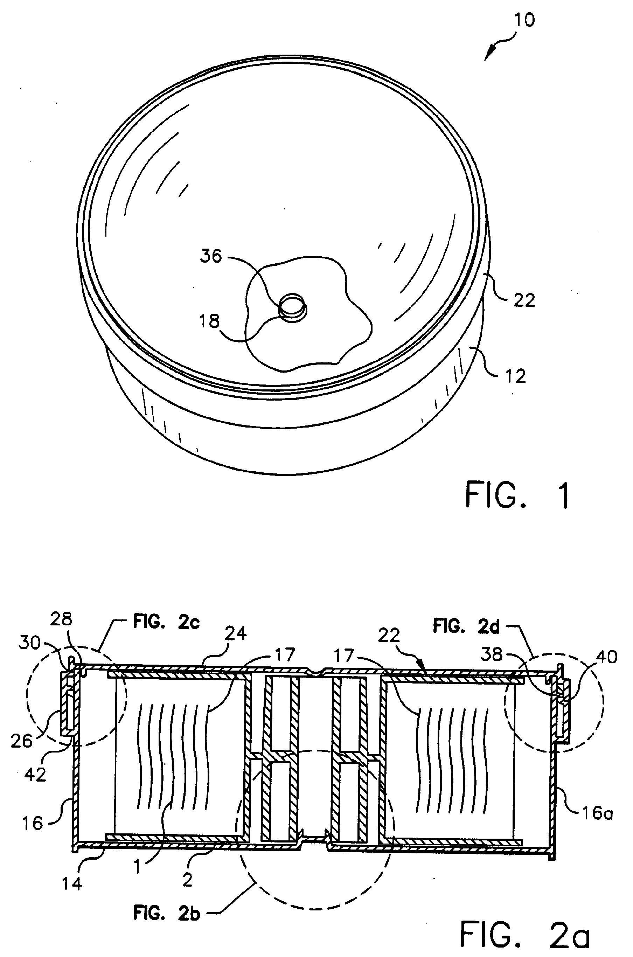

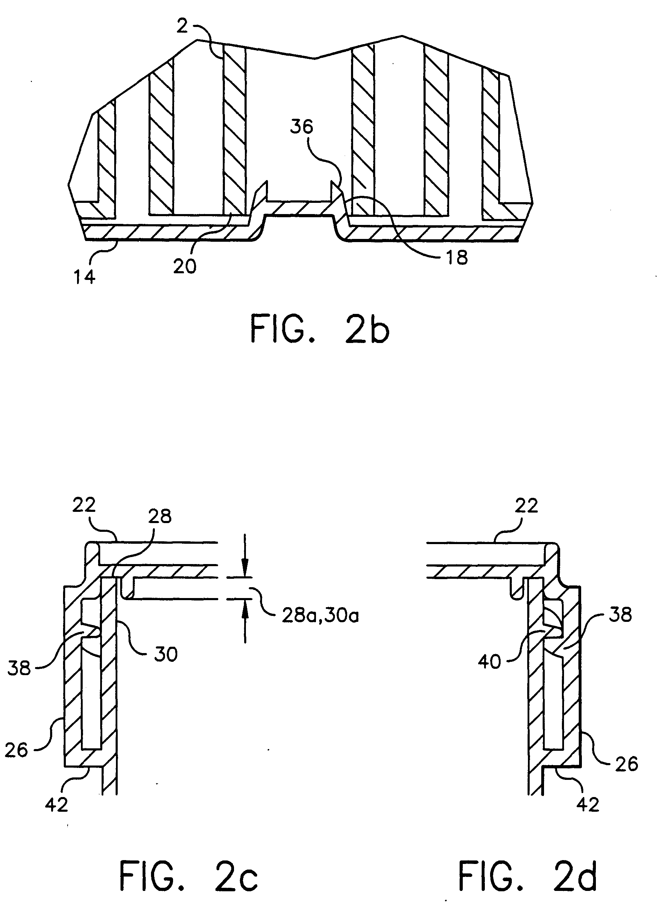

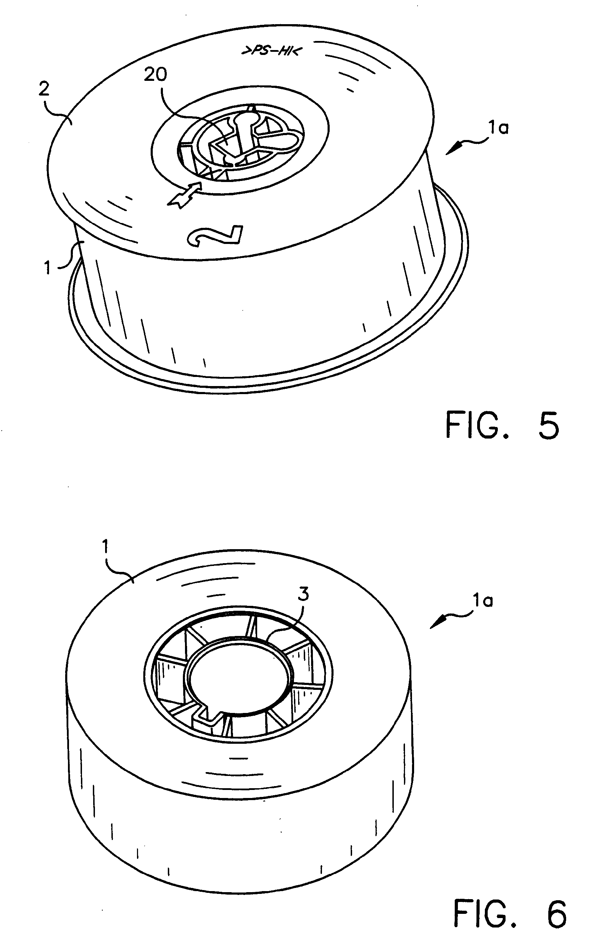

Turning now to the drawings, and in particular to Figs. 1 - 5, the light-tight container 10 of the invention is illustrated. According to Figs. 1 and 2a -2d, light-tight container 10 has a generally cylindrical body portion 12 with a closed base 14 and side walls 16 surrounding the closed base 14. Closed base 14 and side walls 16 form an interior compartment 17 for storing a roll 1 of photosensitive web (Fig. 2a). It is important to the invention that closed base 14 has a central protuberance 18 (described below) for engaging an end 20 of the film core 2. Advantageously, by engaging the core 2 in this manner, the roll 1 of photosensitive web wound thereon is restricted from potentially damaging movement during handling.

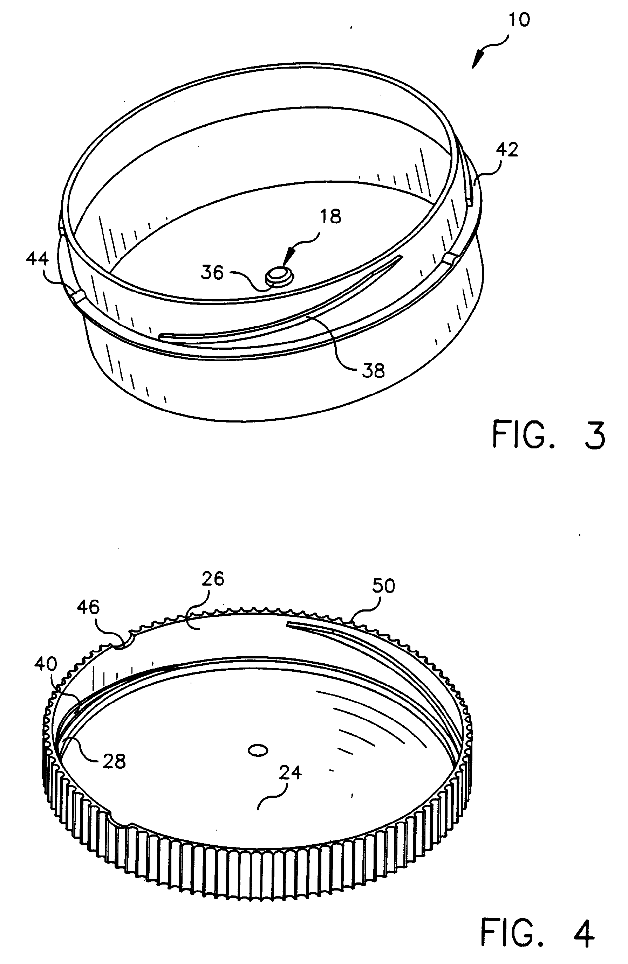

Referring to Figs. 2a-2d and 4, a light-lock closure element 22 configured for closing the interior compartment 17 has a closed portion 24 and lateral walls 26 surrounding the closed portion 24. Closed portion 24 and lateral walls 26 are adjoined at recessed seam 28. When affixed to the body portion 12 of the light-tight container 10, the recessed seam 28 of closure element 22 receives exposed end edges 30 of the side walls 16 of the body portion 12 forming a light blocking labyrinth that protects the roll 1 of photosensitive web. Light blocking is achieved by means of diffusing and absorbing light energy into the side walls 16 and recessed seam 28.

In an alternative embodiment, closure element 22 has an opposing central protuberance (not shown) arranged in the closed portion for capturing an opposing end of the film core 2. Opposing central protuberance is preferably aligned with the first central protuberance in the closed base 14 of the body portion 12 to provide optimum stabilization of the captured film core 2.

Referring to Fig. 3, the lateral walls 26 of closure element 22 has a plurality of helical threads 38 therein which protrude radially from the inner surface of the closure lateral wall 26. Correspondingly, a portion of side walls 16 has a plurality of second helical threads 40 configured for cooperating with the first helical threads 38 in order to fasten the closure element 22 to the body portion 12 (as shown in Fig. 4). Thus, providing axial engagement and disengagement of the light-blocking labyrinth 28a, 30a (shown clearly in Fig. 2c) when the closure is respectively twisted to close or open.

Referring to Figs. 2a-2d, 5, and 6, skilled artisans will appreciate that the end of core 20 hole is larger in the film core without flanges 3 than the film core with flanges 2. Likewise it will be appreciated that the outside diameter la of the wound roll of photosensitive web 1 is larger on the film core without flanges 3 than the film core with flanges 2. In another embodiment, when the light-tight container 10 of the invention is used for storing and handling of film wound on cores without flanges, lateral motion of film and core assembly is limited by lateral space 16a of the container compartment.

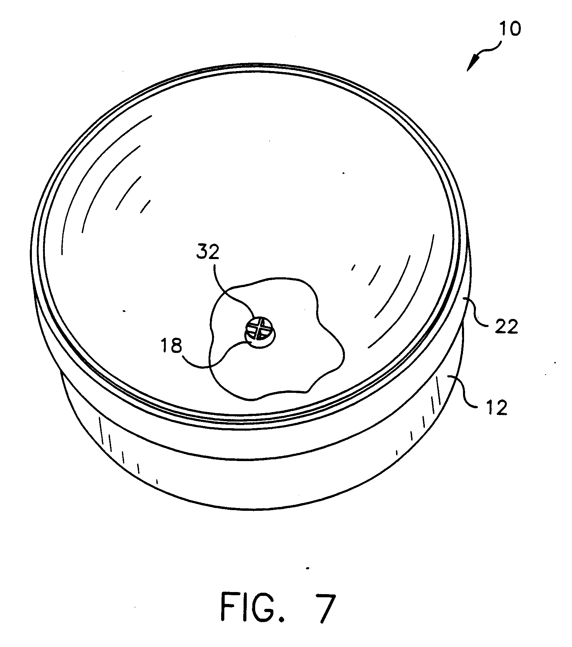

Referring to Figs. 2a-2d, 3, and 7, central protuberance 18 has a tapered end portion 36 for facilitating engagement of the end of the film core 2. The central protuberance 18 may have other shapes 32 to assist core engagement such as conical or spherical as shown in Fig. 7. Further, central protuberance 18 extends vertically upwardly into the interior compartment 17 to a height sufficient to stabilize the film core 2 from movement. Preferably, central protuberance 18 may be a generally round boss or boss segments extending substantially vertically from the closed base 14 of the light-tight container 10 into the interior compartment 17.

According to Figs. 2a-2d, 3, and 4, body portion 12 of light-tight container 10 has a circumferential flange 42 for supporting the closure element 22. It is important to the invention that flange 42 has at least one first detent member 44 for structurally cooperating with at a corresponding at least one second detent member 46 arranged in the closure element 22. Preferably second detent member 46 is arranged on an edge 50 of the lateral wall 26 that is supported by the circumferential flange 42 when the closure element 22 is in a said light-tight relations with the body portion 12 of light-tight container 10. In the preferred embodiment first detent member 44 is a second protuberance and second detent member 46 is a recess configured for engaging the second protuberance.

In another embodiment of the invention, a method of storing and transporting a roll 1 of photosensitive web of indeterminate length wound on a film core 2 comprises the step of providing a light-tight container 10 having a closure element 22, each as described above. The film core 2 supporting the roll 1 of photosensitive web can then be arranged on the central protuberance 18 with a portion of the roll 1 resting on the closed base 14 of the body portion 12. Once the roll 1 is secured on the central protuberance 18, the closure element 22 is then arranged on the body portion 12 in a light-tight relations. Cooperatively engageable helical threads 38, 40 and cooperating first and second detent members 44, 46 (both described above) are preferably used to achieve this light-tight relations.

## Claims

1. A light-tight container for storing a roll of photosensitive web wound on a core, comprising:
a generally cylindrical body portion having a closed base and side walls surrounding said closed base, said closed base and said side walls forming an interior compartment for storing said roll of photosensitive web, said closed base having a central protuberance extending upwardly therefrom in said interior compartment for engaging an end of said core; and,
a light-tight closure element for closing said body portion in a light tight relations, said closure element having a closed portion and lateral walls surrounding said closed portion, said closed portion and said lateral walls having a recessed seam therebetween for receiving end edges of said side walls of said body portion to form a light blocking labyrinth.

2. The container recited in claim 1 wherein said lateral walls of said closure element further comprise a mutually cooperating guide means for cooperating with said container.

3. The container recited in claim 1 wherein said central protuberance has a tapered end portion for facilitating engagement of said end of said core.

4. The container recited in claim 1 wherein said body portion of said container and said closure element comprise a plurality of cooperating helical threads for fastening said closure element to said body portion in a light-tight relations.

5. The container recited in claim 4 wherein said body portion has a circumferential flange comprising a first detent member and said closure element has a cooperating second detent member arranged in an edge of said lateral wall for locking said closure element from axial movement on said circumferential flange.

6. The container recited in claim 1 wherein said central protuberance extends vertically upwardly into said interior compartment to a height sufficient to stabilize said core from movement.

7. The container recited in claim 1 wherein said closure element has an opposing central protuberance arranged in said closed portion for engaging an opposing end of said core.

8. A method of storing and transporting a roll of photosensitive web wound on a core, comprising the steps of:
providing a light-tight container having a body portion comprising a closed base, side walls surrounding said closed base, a central protuberance extending from said closed base for engaging an end of said core, and a closure for closing said body portion;
providing a closure element for closing said body portion in a light-tight relations;
arranging one end of said core supporting said roll of photosensitive web on said central protuberance with a portion of said roll resting on said closed base; and,
arranging said closure element on said body portion in a light-tight relations.
